(19) **Europäisches Patentamt**
**European Patent Office**
**Office européen des brevets**

(11) **EP 3 016 466 A1**

(12) **EUROPEAN PATENT APPLICATION**

(43) Date of publication:
**04.05.2016 Bulletin 2016/18**

(51) Int Cl.:
***H04W 72/12*** *(2009.01)*     ***H04W 88/08*** *(2009.01)*

(21) Application number: **14290329.3**

(22) Date of filing: **31.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Grob-Lipski, Heidrun**
**70435 Stuttgart (DE)**

• **Haberland, Bernd**
**70435 Stuttgart (DE)**
• **Klotsche, Ralf**
**70435 Stuttgart (DE)**
• **Schefczik, Peter**
**70435 Stuttgart (DE)**
• **Soellner, Michael**
**70435 Stuttgart (DE)**

(74) Representative: **DREISS Patentanwälte PartG
mbB
Postfach 10 37 62
70032 Stuttgart (DE)**

(54) **Method to operate a radio access network and radio access network**

(57)     It is proposed a method to operate a radio access network. A first user processing entity (4) determines first target uplink PRBs (6), physical resource blocks, based on an uplink state (8) for a first UE, user equipment. A second user processing entity (14) determines second target uplink PRBs (16) based on an uplink state (18) for a second UE. A cell processing entity (20) determines first effective uplink PRBs (22) for an uplink transmission of the first UE and second effective uplink PRBs (24) for an uplink transmission of the second UE based on the first and second target uplink PRBs (6, 16).

Fig. 1

**Description**

**Field of the invention**

The invention relates to a method to operate a radio access network and/or a base band unit and the radio access network and the base band unit.

**Background**

Long term evolution, LTE, was developed by 3GPP to cope with the increasing demand for better Quality of Service, QoS, and the emergence of bandwidth consuming multimedia applications. To make this possible, a new architecture, the system architecture evolution, SAE, was created, and several technologies such as orthogonal frequency division multiplex, OFDM, and multiple inputs multiple outputs, MIMO, were introduced to the cellular network design.

The SAE is an all-IP network, consisting of the evolved UTRAN, eUTRAN, and the evolved packet core, EPC. eUTRAN consists of only one entity, the evolved NodeB, eNodeB, that is responsible for radio resource management, RRM, making the core of the network flatter and less complex.

The LTE radio interface is completely packet-oriented and uses variants of the OFDM technology both in downlink, eNodeB to UE, and uplink, UE to eNodeB, direction. The basic resource unit on the air interface is called a Physical Resource Block, PRB, which can be assigned to a certain user, i.e. UE, in Resource Block Groups, RBGs, that range over the used frequency domain, bandwidth, and the subframes within a 1 ms timeslot transmission time interval, TTI in the time domain. At every TTI, a scheduling decision has to be made on the exclusive allocation of available PRBs to requesting users, either from the network side or from the terminal side in order to achieve an orthogonal transmission on the air interface. This decision is made by an entity called scheduler, which can be divided into a Downlink-Scheduler for downlink PRB allocation and an Uplink-Scheduler for UL PRB allocation.

In LTE, both scheduler parts run in the eNodeB, supported by respective control data sent to and from the UE over the control channels of the air interface.

The scheduler is the major element in the LTE architecture that is responsible both for the Quality of Experience perceived individually by the user and the efficient usage of scarce radio resources (spectral efficiency) in the system.

LTE uses the SC-FDMA, single carrier frequency division multiple access, radio access technology for its uplink transmission between the eNodeB and the User Equipment UE. As a result, resources assigned to the same user must be contiguous in the frequency domain, in order to allow a less complex design of the UE transceivers in particular a smaller peak to average ratio for the amplifier. Several uplink scheduling algorithms were proposed in the literature to fit that constraint. However, incorporating the PRB contiguity constraint into scheduling algorithms was proven to be NP-hard, thus exhaustive search is impractical. For this reason, all proposed algorithms are heuristic ones, i.e. they find a "good enough" solution, gaining computational performance and conceptual simplicity at the expense of accuracy.

Over time, when the LTE standards evolved to the LTE-Advanced system, more and more new features (such as 'carrier aggregation') have to be taken into account in the scheduling decisions, which increased the complexity of the LTE schedulers even more. With increasing numbers of active mobile users in a cell, scalability of the scheduling functions in terms of user capacity has also been a problem, as typical scheduler designs are based on a monolithic algorithmic approach that run on a single processor. As scheduler decisions have to be taken in realtime within the 1 ms TTI timeframe based on up-to-date quality measurements, extending the required processing time for an algorithm loop does not solve the problem.

Also a typical scheduler design for finding the near optimum PRB allocation with the best metric uses global operations (such as: calculating the maximum value over all involved users) and feedback loops over all involved users that are up to now difficult to distribute over multiple (concurrent/parallel) processing stages. Our invention shows a way to overcome this problem. Similar Scheduling problems may arise in other systems like WiMAX and WLAN or can be anticipated in future 5G systems.

**Summary**

In view of the prior art, it is an object of the present disclosure to improve uplink scheduling in radio access networks.

Therefore, it is proposed a method according to which a first user processing entity determines first target uplink PRBs, physical resource blocks, based on an uplink state for a first UE, user equipment, wherein a second user processing entity determines second target uplink PRBs based on an uplink state for a second UE, and wherein a cell processing entity determines first effective uplink PRBs for an uplink transmission of the first UE and second effective uplink PRBs for an uplink transmission of the second UE based on the first and second target uplink PRBs. This allows a scalable and extendable uplink scheduler with respect to a cloud-based distributed architecture by defining a feed forward architecture for scheduling uplink transmissions from user equipments to base band units. So a rising number of UEs per cell can be served and processed. The architecture avoids loops over involved users and avoids feedback between cell and multiple user stages within a single scheduling time slot (TTI). Therefore it is predestined for being executed in a virtual or multiprocessor environment, where the scheduling system capacity can be increased simply by addition of more processing resources like in a cloud approach.

According to an embodiment the respective user processing entity determines a priority for the respective UE based on the respective target uplink PRBs determined.

According to an embodiment the respective user processing entity is a FDS, frequency diverse scheduling, user processing entity, wherein the FDS user processing entity determines a number of target uplink PRBs in dependence on the UE uplink power, and wherein the respective priority is determined by the FDS user processing entity in dependence on the number of target uplink PRBs and in dependence on a wideband profile.

According to an embodiment the respective user processing entity is a FSS, frequency selective scheduling, user processing entity, wherein the FSS user processing entity determines target uplink PRBs in dependence on the UE uplink power, and wherein the respective priority is determined by the FSS user processing entity in dependence on the spectral efficiency of each of the target uplink PRBs.

According to an embodiment the respective target uplink PRBs are determined for each uplink carrier component, CC, available for the respective UE.

According to an embodiment the cell processing entity receives the priority and the target uplink PRBs from each participating user processing entity, and wherein the cell processing entity determines the effective PRBs for an uplink transmission of the each UE in dependence on the priorities.

According to an embodiment the number of target uplink PRBs is reduced if a collision of the target uplink PRBs with effective uplink PRBs is detected.

According to an embodiment alternative target PRBs are determined by the respective user processing entity, and wherein the alternative target PRBs are allocated if the reduced target uplink PRBs provide less transport capacity.

According to an embodiment the respective cell processing entity re-calculates a priority for a respective UE if the alternative target uplink PRBs is selected, and wherein the priorities are re-sorted.

According to an embodiment the cell processing entity sends the respective effective uplink PRBs to the respective user processing entity, wherein the respective user processing entity determines the modulation and coding scheme based on the granted effective uplink PRBs, and wherein the respective user processing entity sends a scheduling grant to the respective UE for the upcoming transmission time interval, TTI.

**Brief description of the figures**

Figure 1         shows schematically a block diagram;

Figure 2         shows a schematic radio cell;

Figure 3         shows a schematic block diagram;

Figure 4         shows a schematic flow diagram;

Figure 5 and 6    show a schematic signal to noise ratio over physical resource blocks diagram, respectively;

Figure 7 and 8    show a schematic flow diagram, respectively; and

Figure 9         shows a schematic signal to noise ratio over physical resource blocks diagram.

**Description of the embodiments**

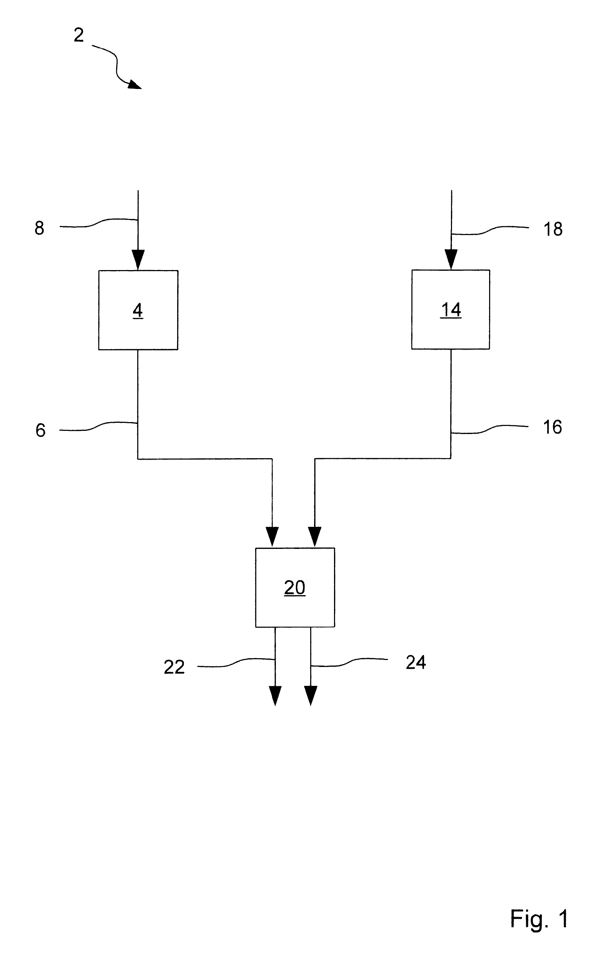

Figure 1 shows schematically a block diagram 2. It is shown a method to operate a radio access network. A first user processing entity 4 determines first target uplink PRBs 6, physical resource blocks, based on an uplink state 8 for a first UE, user equipment. A second user processing entity 14 determines second target uplink PRBs 16 based on an uplink state 18 for a second UE. A cell processing entity 20 determines first effective uplink PRBs 22 for an uplink transmission of the first UE and second effective uplink PRBs 24 for an uplink transmission of the second UE based on the first and second target uplink PRBs 6 and 16. The cell processing entity 20 may comprise a plurality of sub cell processing entities, wherein each sub cell processing entity is assigned to a respective CC. An uplink state 8, 18 comprises a wideband and/or subband SINR profile of at least one CC of a respective UE.

The target PRBs 6, 16 are defined as one or more PRBs the respective user processing entity 4, 14 pre-selects as desired PRBs, which means that the user processing entity 4, 14 determines a request for the cell processing entity 20 with respective PRBs which the respective UE would like to reserve. The target PRBs 6, 16 represent inter alia the radio conditions with respect to one UE.

The effective PRBs 22, 24 are defined as scheduled PRBs which are reserved / booked / granted for the respective UE.

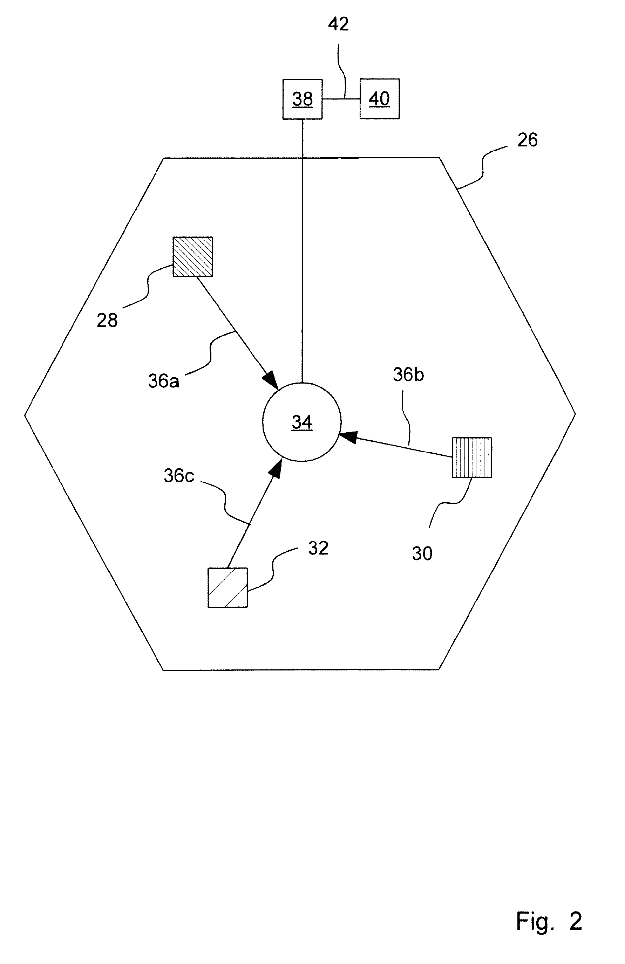

Figure 2 shows a schematic radio cell 26 with the first UE 28, the second UE 30 and a third UE 32 connected to a remote radio head, RRH, 34 of the radio cell 26. The UEs 28, 30 and 32 transmit a respective uplink scheduling request 36 to the RRH 34. The RRH 34 is connected to a home base band unit 38, BBU. The BBU 38 is connected to a remote BBU 40 via a low latency link 42. The BBU 38 and 40 establish a mobile cloud.

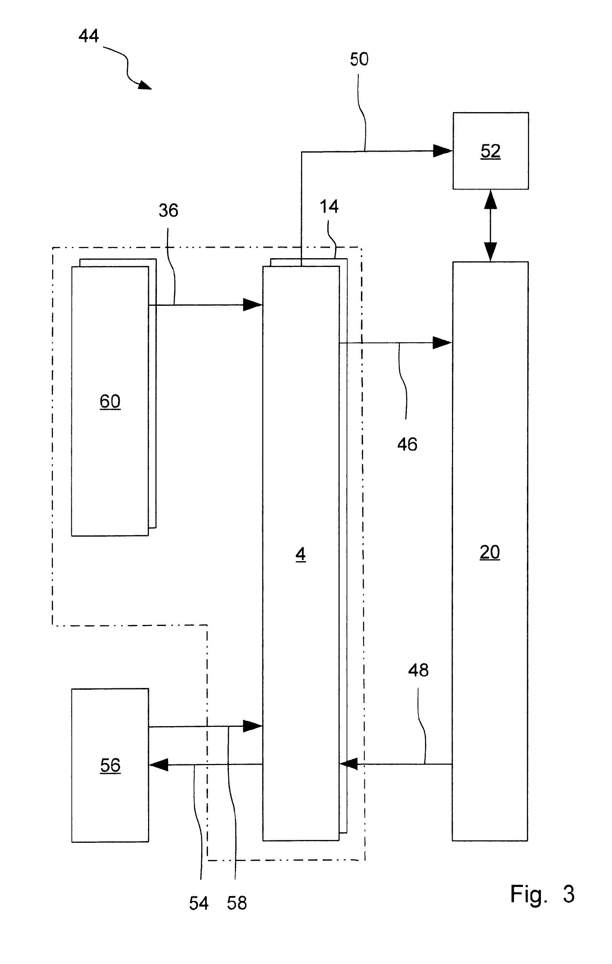

Figure 3 shows a schematic block diagram 44. The first user processing entity 4 sends a request message 46 to the cell processing entity 20. Accordingly the second user processing entity 14 also send a request message 46 to the cell processing entity. According to the request messages 46 received from respective user processing entities 4, 14 the cell processing entity 20 send a grant message 48 to the respective user processing entities 4, 14. The request message 46 may comprise a plurality of main target PRBs and further target PRBs.

Furthermore the request message 46 may comprise a primary CC, one PRB per island, a priority value for PRB within target PRBs, an SR_flag (setting highest priority).

In the case of FSS the request message 46 comprises across all CCs: CC index, PRBs per island, priority values per PRB per island, the highest priority metric (= Highest average main island priority), a QoS, Quality of Service, weight factor.

In the case of FDS the message 46 comprises across all CCs a CC index, the number of PRBs, a wideband priority value and a QoS weight factor.

Furthermore the message 46 may comprise a BO HARQ ACK/NACK indicator per used carrier component for non-VoLTE bearer, a HARQ ACK/NACK indicator per primary carrier component for VoLTE bearer, a TalkSpurt/SID Change indication for VoLTE, a TTI Bundling flag for VoLTE.

The cell processing entity 20 sends the respective effective uplink PRBs 22, 24 to the respective user processing entity 4, 14 via the grant message 48. The respective user processing entity 4, 14 determines the modulation and coding scheme based on the effective uplink PRBs 22, 24. The respective user processing entity 4, 14 sends a scheduling grant 50 to the respective UE 28, 30 for the upcoming transmission time interval, TTI, via a cell downlink scheduler 52.

The grant message 48 may comprise the following structure for each determined effective consecutive PRBs (start, size) in case of SR: PCC, one indexed PRB for selected effective PRBs. In case of BSR for FSS user per allocated CC: CC index, PRBs per selected effective PRBs. In case of BSR for FDS user per allocated CC: CC index, and selected effective PRBs.

A needed processing capacity 54 is sent from the user processing entity 4, 14 to a resource manager 56. The resource manager 56 decides with a processing grant message 58 whether the respective user processing entity 4, 14 is executed on the home BBU 38 or the remote BBU 40.

A user processor 60 send the uplink scheduling request 36 in form of a scheduling request, SR, and/or a buffer status report, BSR, and/or a respective power headroom and/or a respective signal to interference plus noise ratio, SINR, profile and/or a wideband profile and/or a subband profile and/or an uplink hybrid automatic repeat request, HARQ, acknowledgement, ACK, or a HARQ NACK, non-acknowledgement and/or a transmission time interval, TTI, bundling, TTIB state and/or a maximum power of the respective UE and/or a UE category, for example for machine-type communications, and/or the applicable carrier components, CCs, and/or a silent insertion descriptor, SID, Talkspurt Detection to the user scheduler 4, 14 via a message path 60. The SINR profile can be measured by the received sounding reference signals, SRS, sent out to the cell by the respective UE.

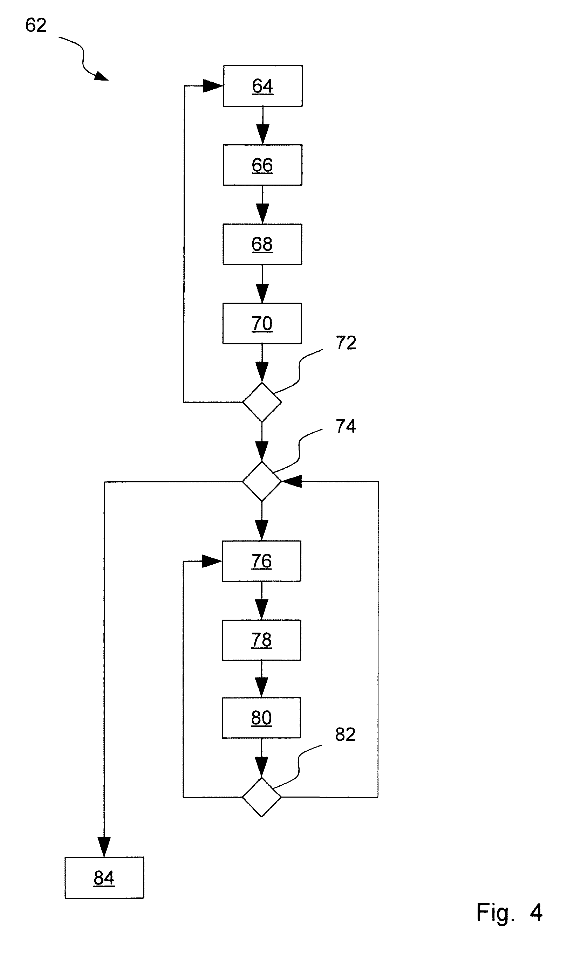

Figure 4 shows a schematic flow diagram 62 of a user processing entity 4, 14 for frequency selective scheduling, FSS. At step 64 a loop over all applicable or available CCs of a UE is started. At step 66 main target uplink PRBs are determined in dependence on UE uplink power for each available CC for example by starting with the highest SINR value for a respective PRB and augmenting a respective PRB area up to a respective edge resulting in a number of concatenated PRBs.

At step 68 the main target uplink PRBs are determined in dependence on a provided Buffer Occupancy, BO, of the UE which results in a reduction of the number of main target uplink PRBs or the main target uplink PRBs remain unchanged.

At step 70 a respective priority is determined in dependence on the spectral efficiency of each of the target uplink PRBs. Particularly a priority profile is determined according to formula 1.

$$Priority\ Profile(u, PRB) := \frac{QoS\ weight\ (u) \cdot spectral\ efficiency\ (u, PRB)}{long\ term\ average\ of\ spectral\ efficiency^{\alpha}} \qquad (1)$$

According to formula 1 $\alpha$ =1 means maximal fairness, $\alpha$ = 0 means minimal fairness, $\alpha$ in [0,..,1], u refers to the respective UE, and the long term average of spectral efficiency is an average value over the average spectral efficiency value over the last n TTIs.

Furthermore, at step 70 it is calculated the priority according to an average over priority profile of the main target uplink PRBs.

At step 72 it is determined whether there are further PRBs to allocate, if yes it is returned to step 64, if not it is continued with step 74. Further PRBs to allocate means that the buffer occupancy value exceeds the transport block size and the available UE power is sufficient.

At step 74 it is determined whether there are further PRBs to allocate, if yes it is continued with step 76, if not it is continued with step 84.

At step 76 further target uplink PRBs are determined in dependence on UE uplink power in each available CC for example by starting with the next highest SINR value after the previously highest SINR value for the main target uplink PRBs.

At step 78 the further target uplink PRBs are determined or matched in dependence on a remaining Buffer Occupancy, BO, of the UE which results in a reduction of the number of main target uplink PRBs or the further target uplink PRBs remain unchanged.

At step 80 at least a priority profile is determined according to formula 1. Furthermore a priority may be determined.

At step 82 it is determined whether the further target uplink PRBs provide at least X % of a maximum average spectral efficiency of the respective main target uplink PRBs, if yes then the current further target uplink PRBs are assigned to the respective main target uplink PRBs and it is continued in step 76 for the next CC or the next main target PRBs, if not the current further target uplink PRBs are skipped and it is continued with step 74.

At step 84 the procedure is terminated and the main and further PRBs are submitted to the cell processing entity 20.

If the user processing entity 4, 14 decides that a UE will be scheduled in the upcoming TTI, the user processing entity 4 perform QoS weight processing as a function of GBR/NonGBR, QCI, Buffer Occupancy, Best Effort minimal rate.

According to an embodiment the priority of a UE may be determined inter alia based on the main target uplink PRBs and/or based on a buffer status of the UE, for example a queue length, an amount of waiting uplink data. The priority may therefore also represent the need of a UE to transmit data.

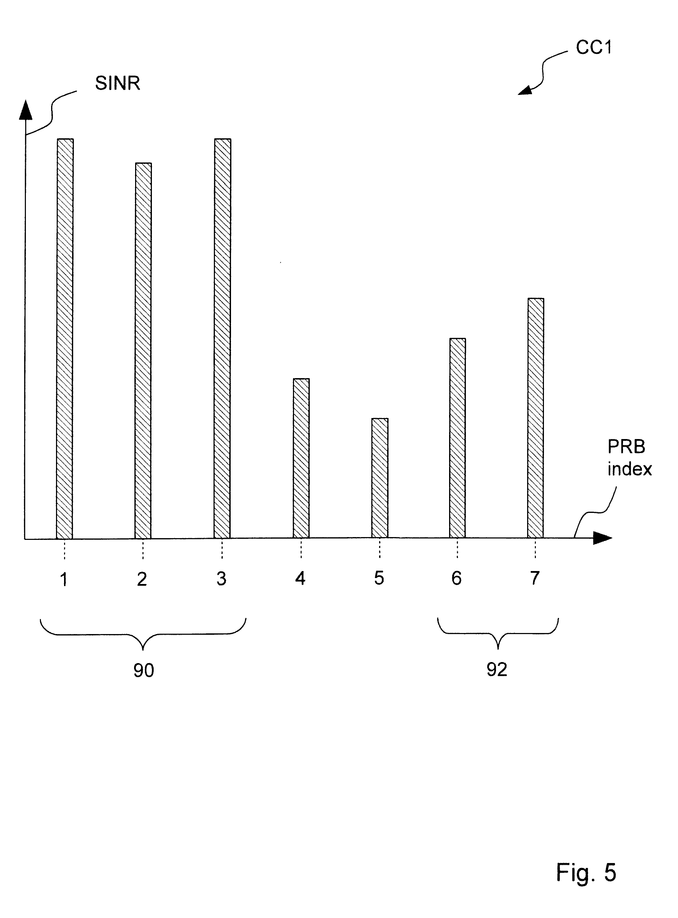

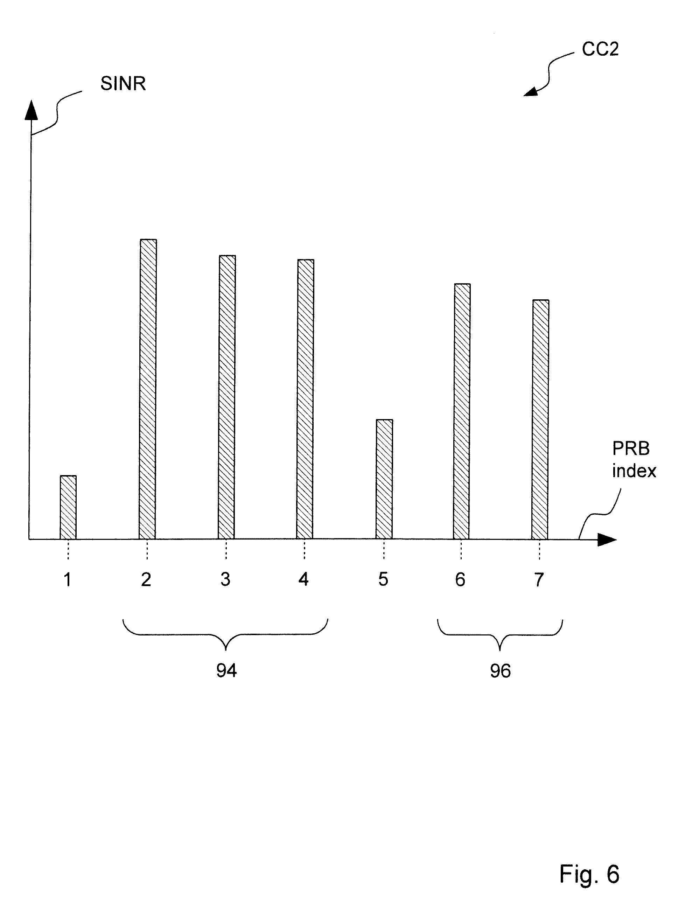

Figure 5 and 6 show a schematic signal to noise ratio over physical resource blocks diagram, respectively, illustrating the procedure according to figure 4. In the CC1 of figure 5 the main target uplink PRBs 90 and the further target uplink PRBs 92 are shown. In the CC2 of figure 6 the further target uplink PRBs 94 and the further target uplink PRBs 96 are shown. However, depending on the UE capabilities in each CC1 and CC2 one of the respective islands according to concatenated target uplink PRBs 90 or 92 and the target uplink PRBs 94 or 96 may be used.

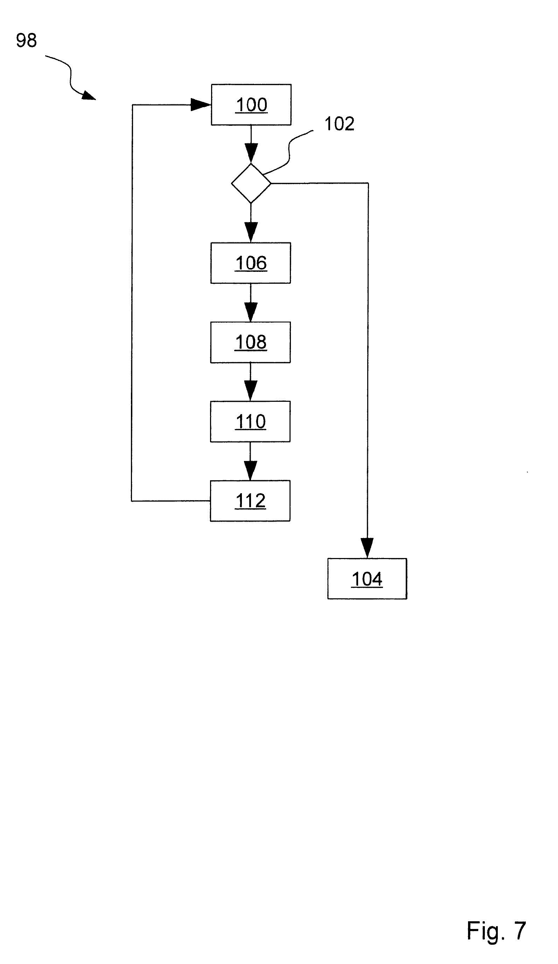

Figure 7 shows a schematic flow diagram 98 for a FDS, frequency diverse scheduling, user processing entity. In step 100 it is looped over all CCs. In step 102 it is determined whether there are PRBs to allocate, if not then it is continued with the termination step 104, if yes then it is continued with step 106. In step 106 is determined a number of PRBs limited by the available UE power. In step 108 it is determined or matched the number of PRBs so that the Transport Blocks Size, TBS, in PRBs corresponds to the Buffer Occupancy, BO, of the UE, in PRBs. In step 110 for each CC it is determined the priority profile according to formula 1 to one value per CC. In step 112 the priority is determined for the UE according to the highest priority metric over all yet looped over CCs.

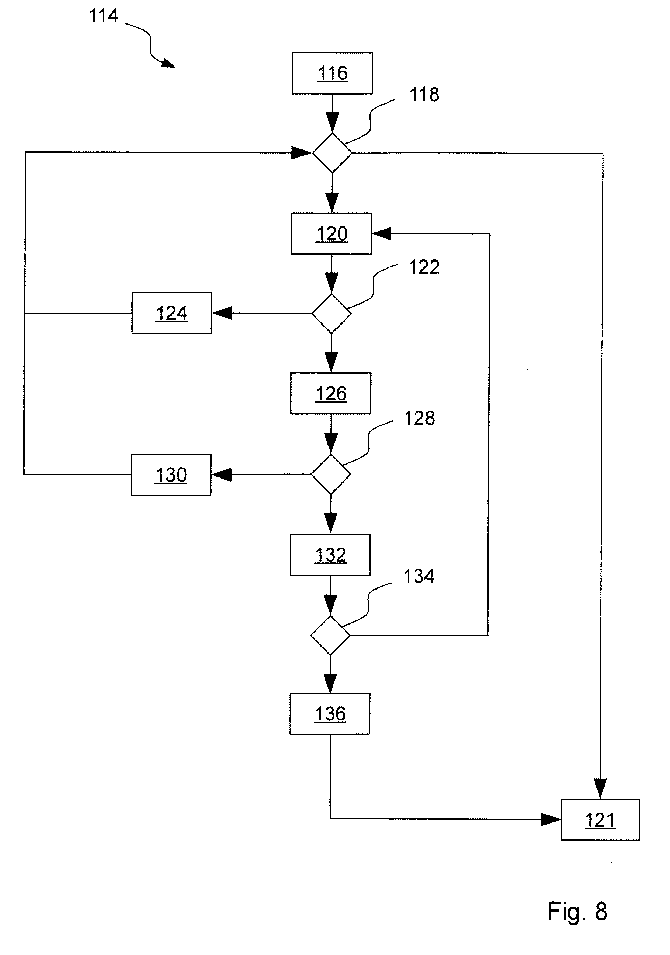

Figure 8 shows a schematic flow diagram 114 for the cell processing entity. After the starting step 116 in step 118 it is determined whether there are PRBs left to allocate. If yes it is continued with step 120, if not it is ended in block 121. In step 120 it is looped over all UEs in a priority list according to the priorities established in the user processing entities. In step 122 it is determined whether for the main target PRBs of the current UE there are collisions with yet allocated PRBs, if not then the respective main target PRBs are allocated according to step 124, if yes then it is continued in step 126. In step 126 the main target PRBs are reduced in size to resolve the collision. In step 128 it is determined whether there exist further target PRBs with a TBS value greater than the TBS value of the reduced main target PRBs, if not then the reduced main target PRBs are allocated according to step 130, if yes then it is continued with step 132. In step 132 the further target PRBs with the maximum TBS are selected and the priority for the UE is re-calculated in dependence on the further target PRBs. In step 134 it is checked whether the priority of the UE is still the current highest priority to be completed, if not it is changed to step 120, if yes it is continued with step 136. In step 136 the further target PRBs are allocated.

In an alternative embodiment the steps 134 and 136 may be omitted to maintain strict priority scheduling for UEs.

Of course PRBs reserved for HARQ retransmissions are not used in the PRB allocation according to the cell processing entity and are therefore reserved.

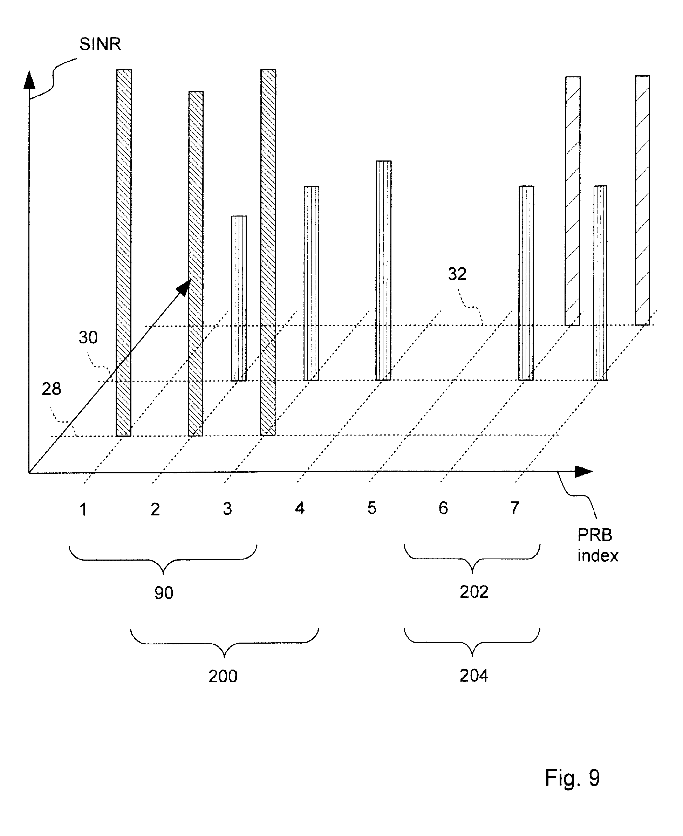

Figure 9 shows a schematic signal to noise ratio over physical resource blocks diagram for the UEs 28, 30 and 32. The UE 28 has the highest priority, the UE 30 has the second highest priority and UE 32 has the third highest priority. Accordingly the main target PRBs 90 are granted for UE 28. The main target PRBs 200 are not granted for UE 30 according to a not sufficient size. Therefore the further target PRBs 202 of UE 30 are granted. The main target PRBs 204 of UE 32 are not granted as yet occupied by UE 30 with a higher priority. In this case only a further CC for UE 32 may contain target PRBs to be scheduled.

If the priorities are re-calculated according to an embodiment then the main target PRBs 204 may be granted instead of the further target PRBs 202 of UE 30 when UE 32 gets a higher priority than UE 30.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method to operate a radio access network,
   wherein a first user processing entity (4) determines first target uplink PRBs (6), physical resource blocks, based on an uplink state (8) for a first UE (28), user equipment, wherein a second user processing entity (14) determines second target uplink PRBs (16) based on an uplink state (18) for a second UE (30), and wherein a cell processing entity (20) determines first effective uplink PRBs (22) for an uplink transmission of the first UE (28) and second effective uplink PRBs (24) for an uplink transmission of the second UE (30) based on the first and second target uplink PRBs (6, 16).

2. The method according to claim 1, wherein the respective user processing entity (4, 14) determines a priority for the respective UE (28, 30) based on the respective target uplink PRBs (6, 16) determined.

3. The method according to claim 2, wherein the respective user processing entity (4, 14) is a FDS, frequency diverse scheduling, user processing entity, wherein the FDS user processing entity (4, 14) determines a number of target uplink PRBs (6, 16) in dependence on the UE uplink power, and wherein the respective priority is determined by the FDS user processing entity (4, 14) in dependence on the number of target uplink PRBs (6, 16) and in dependence on a wideband profile.

4. The method according to claim 2 or 3, wherein the respective user processing entity (4, 14) is a FSS, frequency selective scheduling, user processing entity, wherein the FSS user processing entity (4, 14) determines target uplink PRBs (6, 16) in dependence on the UE uplink power, and wherein the respective priority is determined by the FSS user processing entity (4, 14) in dependence on the spectral efficiency of each of the target uplink PRBs (6, 16).

5. The method according to claims 3 or 4, wherein the respective target uplink PRBs (6, 16) are determined for each uplink carrier component, CC, available for the respective UE.

6. The method according to one of the preceding claims 2 to 5, wherein the cell processing entity (20) receives the priority and the target uplink PRBs (6, 16) from each participating user processing entity (4, 14), and wherein the cell processing entity (20) determines the effective PRBs (22, 24) for an uplink transmission of each UE (28, 30) in dependence on the priorities.

7. The method according to claim 6, wherein the number of target uplink PRBs (6, 16) is reduced if a collision of the target uplink PRBs (6, 16) with effective uplink PRBs (22, 24) is detected.

8. The method according to claim 7, wherein further target PRBs (6, 16) are determined by the respective user processing entity (4, 14), and wherein the further target PRBs (6, 16) are allocated if the reduced main target uplink PRBs (6, 16) provide less transport capacity in comparison with the further target PRBs (6, 16).

9. The method according to claim 8, wherein the respective cell processing entity (20) re-calculates a priority for a respective UE if the further target uplink PRBs (6, 16) are selected, and wherein the UEs are re-sorted based on re-sorted respective priorities.

10. The method according to one of the preceding claims, wherein the cell processing entity (20) sends the respective effective uplink PRBs (22, 24) to the respective user processing entity (28, 30), wherein the respective user processing entity (4, 14) determines the modulation and coding scheme based on the granted effective uplink PRBs (22, 24), and wherein the respective user processing entity (4, 14) sends a scheduling grant to the respective UE (28, 30) for the upcoming transmission time interval, TTI.

11. The method according to one of the preceding claims, wherein the first user processing entity (4) is being processed on a different baseband unit, BBU, (38; 40) and/or on a different processing core than the second user processing entity (14) is being processed on.

12. A radio access network, wherein a first user processing entity (4) is configured to determine first target uplink PRBs (6), physical resource blocks, based on an uplink state (8) for a first UE (28), user equipment, wherein a second user processing entity (14) is configured to determine second target uplink PRBs (16) based on an uplink state (18) for a second UE (30), and wherein a cell processing entity (20) is configured to determine first effective PRBs (22) for an uplink transmission of the first UE (28) and second effective PRBs (24) for an uplink transmission of the second UE (30) based on the first and second target uplink PRBs (6, 16).

13. The radio access network according to the preceding claim configured to operate according to the method according to one of the claims 1 to 11.

14. A base band unit, BBU, wherein a first user processing entity (4) is configured to determine first target uplink PRBs (6), physical resource blocks, based on an uplink state (8) for a first UE (28), user equipment, wherein a second user processing entity (14) is configured to determine second target uplink PRBs (16) based on an uplink state (18) for a second UE (30), and wherein a cell processing entity (20) is configured to determine first effective PRBs (22) for an uplink transmission of the first UE (28) and second effective PRBs (24) for an uplink transmission of the second UE (30) based on the first and second target uplink PRBs (6, 16).

15. The BBU according to the preceding claim configured to operate according to the method according to one of the claims 1 to 11.

2

8

4

18

14

6

16

20

22        24

Fig. 1

Fig. 2

44

50

36

14

52

60

4

20

46

48

56

54    58

Fig. 3

Fig. 4

Fig. 5

Fig. 6

98

100

102

106

108

110

112

104

Fig. 7

114

116

118

120

122

124

126

128

130

132

134

136

121

Fig. 8

Fig. 9

Europäisches
Patentamt

European
Patent Office

Office européen
des brevets

# EUROPEAN SEARCH REPORT

Application Number

EP 14 29 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br><br>A | GB 2 476 488 A (NEC CORP [JP])<br>29 June 2011 (2011-06-29)<br>* page 8, line 5 - page 10, line 10 *<br>* page 11, line 19 - page 15, line 26;<br>figures 4,7 *<br>----- | 1,10,<br>12-15<br>3-5,7-9,<br>11<br>2,6 | INV.<br>H04W72/12<br><br>ADD.<br>H04W88/08 |
| X<br><br>Y<br>A | US 2010/329199 A1 (LIU LE [JP] ET AL)<br>30 December 2010 (2010-12-30)<br>* page 2, paragraph 38 - page 4, paragraph<br>82; figures 4-6 *<br><br>----- | 1,2,6,<br>12,14<br>3-5,7-9<br>10,11,<br>13,15 | |
| Y<br><br><br><br><br><br><br><br><br>A | DOTSCH UWE ET AL: "Quantitative analysis<br>of split base station processing and<br>determination of advantageous<br>architectures for LTE",<br>BELL LABS TECHNICAL JOURNAL, WILEY, CA,<br>US,<br>vol. 18, no. 1, 1 June 2013 (2013-06-01),<br>pages 105-128, XP011569633,<br>ISSN: 1089-7089, DOI: 10.1002/BLTJ.21595<br>[retrieved on 2014-03-15]<br>* page 109, left-hand column, line 37 -<br>line 41 *<br>* page 122, left-hand column, line 1 -<br>line 44 *<br>----- | 11<br><br><br><br><br><br><br><br><br>1-10,<br>12-15 | TECHNICAL FIELDS<br>SEARCHED (IPC)<br><br>H04W |
| A | WO 2011/120594 A1 (TELEFONICA SA [ES];<br>BERBERANA FERNANDEZ-MURIAS IGNACIO [ES];<br>VEGA NOVE) 6 October 2011 (2011-10-06)<br>* page 10, line 20 - page 12, line 21 *<br>----- | 1-15 | |

The present search report has been drawn up for all claims

| Place of search | Date of completion of the search | Examiner |
|---|---|---|
| The Hague | 22 April 2015 | López García, J |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 14 29 0329

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2015

| Patent document cited in search report | | Publication date | Patent family member(s) | | Publication date |
|---|---|---|---|---|---|
| GB 2476488 | A | 29-06-2011 | CN | 102668442 A | 12-09-2012 |
| | | | EP | 2517394 A1 | 31-10-2012 |
| | | | EP | 2665222 A1 | 20-11-2013 |
| | | | GB | 2476488 A | 29-06-2011 |
| | | | JP | 5622002 B2 | 12-11-2014 |
| | | | JP | 2013516086 A | 09-05-2013 |
| | | | KR | 20120108015 A | 04-10-2012 |
| | | | US | 2012287881 A1 | 15-11-2012 |
| | | | WO | 2011078392 A1 | 30-06-2011 |
| US 2010329199 | A1 | 30-12-2010 | CN | 101960901 A | 26-01-2011 |
| | | | JP | 5633929 B2 | 03-12-2014 |
| | | | JP | 5645038 B2 | 24-12-2014 |
| | | | JP | 2014003714 A | 09-01-2014 |
| | | | US | 2010329199 A1 | 30-12-2010 |
| | | | WO | 2009116489 A1 | 24-09-2009 |
| WO 2011120594 | A1 | 06-10-2011 | AR | 080743 A1 | 02-05-2012 |
| | | | CN | 102884856 A | 16-01-2013 |
| | | | EP | 2554000 A1 | 06-02-2013 |
| | | | ES | 2376328 A1 | 13-03-2012 |
| | | | ES | 2528223 T3 | 05-02-2015 |
| | | | US | 2013083755 A1 | 04-04-2013 |
| | | | UY | 33292 A | 30-12-2011 |
| | | | WO | 2011120594 A1 | 06-10-2011 |

EPO FORM P0459

For more details about this annex : see Official Journal of the European Patent Office, No. 12/82